# EUROPÄISCHE PATENTSCHRIFT

(11) **EP 2 583 558 B1**
(45) Veröffentlichungstag und Bekanntmachung des Hinweises auf die Patenterteilung: **21.12.2016**
(21) Anmeldenummer: 12189055.2
(22) Anmeldetag: 18.10.2012
(51) Int. Cl.: A21C 13/00, A21C 13/02

(54) **Hänge-Aufnahmeeinrichtung mit Wechsel-Einlage aus textilem Material**
Suspended holder with exchangeable insert made of textile material
Dispositif de réception suspendu avec revêtement échangeable à base de matière textile

(30) Priorität: 20.10.2011 DE 102011084895
(43) Veröffentlichungstag der Anmeldung: 24.04.2013
(73) Patentinhaber: Werner & Pfleiderer Lebensmitteltechnik GmbH, 91550 Dinkelsbühl (DE)
(72) Erfinder: Kriegbaum, Stefan, 91731 Langfurth (DE); Fiedler, Rudolf, 91731 Langfurth (DE)
(74) Vertreter: Rau, Schneck & Hübner Patentanwälte Rechtsanwälte PartGmbB

(56) Entgegenhaltungen:
- WO-A1-2011/075182
- AT-A1- 509 137
- DE-U1- 29 905 242
- DE-U1-202006 015 161
- FR-A1- 2 138 447
- FR-A1- 2 480 081

## Beschreibung

Die Erfindung betrifft eine Hänge-Aufnahmeeinrichtung mit einem als Wechsel-Einlage ausgebildetem Teigling-Auflageelement sowie ein Verfahren zum Wechseln des Teigling-Auflageelements. Hänge-Aufnahmeeinrichtungen der eingangs genannten Art sind durch offenkundige Vorbenutzung bekannt. So offenbart die DE 20 2006 015 161 U1 eine Hänge-Aufnahmeeinrichtung mit einem Teigling-Auflageelement, dass als mit einem Grundkörper lösbar verbundener Wechsel-Einsatz ausgeführt ist.

Die AT 209 137 A1 offenbart einen Gärgutträger zur Lagerung und zum Transport von Backgut mit einem flächigen Auflagematerial gemäss dem Oberbegriff des Anspruchs 1.

Aus der FR 2 480 081 A1 ist eine Tragvorrichtung für Teig bekannt, auf welche ein Auflageelement aufgelegt wird. Die WO 2011/075 182 A1 offenbart eine Hänge-Aufnahmeeinrichtung mit einem Grundkörper und einem Teigling-Auflageelement, welches schlauch- bzw. strumpfförmig aus einem Polymermaterial ausgebildet ist. Die DE 299 05 242 U1 zeigt eine Gärleiste mit einer Aufnahmewanne und einer Backeinlage, welche lösbar in der Aufnahmewanne fixiert ist. Aus der FR 2 138 447 A1 ist eine Tragvorrichtung für Teig bekannt, welche einen Tragrahmen mit zwei Längsstangen und zwei Querstangen umfasst, wobei ein Teigling-Auflageelement um die Längsstangen geschlungen ist. Für verschiedene Verwendungen der Hänge-Aufnahmeinrichtungen sind die Auflageelemente oft zu wechseln und zu reinigen. Häufig sind bekannte, insbesondere aus Kunststoff geformte, Teigling-Auflageelemente an die Ausgestaltung und die Abmessungen des jeweiligen Grundkörpers angepasst. Ein Nachrüsten von bekannten Hänge-Aufnahmeeinrichtungen mit Teigling-Auflageelementen ist folglich schwierig und teuer. Auch das Reinigen bekannter Auflageelemente ist aufwändig.

Es ist daher eine Aufgabe der vorliegenden Erfindung, eine Hänge-Aufnahmeeinrichtung der eingangs genannten Art derart weiterzubilden, dass ein und dieselbe Wechsel-Einlage für unterschiedlichste Hänge-Aufnahmeinrichtungen verwendet werden kann. Des Weiteren soll die Reinigung der Wechsel-Einlagen vereinfacht werden.

Diese Aufgabe ist erfindungsgemäß gelöst durch eine Hänge-Aufnahmeeinrichtung mit den in Anspruch 1 angegebenen Merkmalen.

Erfindungsgemäß wurde erkannt, dass dann, wenn das Teigling-Auflageelement als Wechsel-Einlage aus textilem Material gebildet ist und mit dem Grundkörper der Hänge-Aufnahmeeinrichtung mittels mindestens einer als Klemmschiene ausgebildeten Klemmvorrichtung lösbar verbunden ist, das Teigling-Auflageelement für verschiedenste Grundkörper verwendet werden kann. Gleichzeitig besteht auch die Möglichkeit, das Teigling-Auflageelement einfach vom Grundkörper zu lösen und zu reinigen. Dies erhöht die Flexibilität der Teigling-Auflageelemente erheblich. Durch die Verwendung der Klemmvorrichtung in Form einer Klemmschiene kann die Wechsel-Einlage aus textilem Material an verschiedensten Hänge-Aufnahmeeinrichtungen einfach fixiert und gelöst werden. Dadurch, dass die Klemmschiene aus Kunststoff gefertigt ist, ist diese durch ein Extrusionsverfahren herstellbar. Dadurch, dass zumindest ein Randbereich des Teigling-Auflageelements zwischen Grundkörper und Klemmschiene eingeklemmt ist, ist eine besonders einfache und sichere Befestigung des Teigling-Auflageelements am Grundkörper der Hänge-Aufnahmeeinrichtung gewährleistet.

Die Gestaltung der mindestens einen Klemmschiene nach Anspruch 2 ermöglicht es, die Klemmschiene mittels eines kostengünstigen Extrusionsverfahren herzustellen. Des Weiteren werden durch die Gestaltung der Klemmschiene eine einfache Handhabung und eine Wiederverwendbarkeit dieser ermöglicht.

Die Gestaltung der mindestens einen Klemmschiene nach Anspruch 3 gewährleistet zum einen eine verbesserte Federwirkung und damit höhere Haltekraft der Klemmschiene. Zum anderen wird das Ankleben der Teiglinge an der Klemmschiene deutlich reduziert.

Dadurch, dass die mindestens eine Klemmschiene gemäß Anspruch 4 mindestens eine Durchbrechung aufweist, wird ermöglicht, dass die Klemmschiene mit Vorsprüngen des Grundkörpers zusammenwirken kann und das Teigling-Auflageelement zwischen Arretiervorsprüngen des Grundkörpers und den Durchbrechungen der Klemmschiene besonders sicher und fest einklemmbar ist.

Durch das Vorsehen zweier seitlicher Haltestifte am Grundkörper nach Anspruch 5 wird ermöglicht, die Hänge-Aufnahmeeinrichtung nach Art von Gondeln auf einfache Art und Weise an dem Förderelement einzuhängen.

Eine Hänge-Aufnahmeeinrichtung nach Anspruch 6 bietet die Möglichkeit einer Vorfixierung des Teigling-Auflageelements an dem Grundkörper, um in der Folge das Anbringen der mindestens einen Klemmschiene zu erleichtern. Alternativ ist es möglich, die Klemmschiene am Teigling-Auflageelement vorzufixieren. Auf Arretiervorsprünge am Grundkörper kann dann verzichtet werden.

Ein Teigling-Auflageelement als Zuschnitt aus einem textilen Flächengebilde nach Anspruch 7 ist besonders kostengünstig und flexibel an verschiedene Grundkörper anpassbar.

Ein Teigling-Auflageelement nach einem der Ansprüche 8, 9 oder 10 ermöglicht es, das Teigling-Auflageelement schon vor dem Anbringen der Klemmschiene an dem Grundkörper der Hänge-Aufnahmeeinrichtung vorzufixieren. Dies erleichtert die Anbringung der Klemmschiene, da sich das Teigling-Auflageelement nicht mehr ungewollt vom Grundkörper lösen kann.

Durch das Verfahren nach Anspruch 12 wird das Wechseln des Teigling-Auflageelements auf einfache Art und Weise ermöglicht. Die mindestens eine Klemmschiene und/oder das neue bzw. gereinigte Teigling-Auflageelement können alternativ oder zusätzlich durch Hilfsmittel wie einen Klebstoff vorfixiert werden. Die Klemmschiene und das Teigling-Auflageelement können, insbesondere nach einem Vorfixieren aneinander, gemeinsam wieder am Grundkörper angebracht werden. Hierdurch kann das Anbringen der mindestens einen Klemmschiene und des neuen bzw. gereinigten Teigling-Auflageelements am Grundkörper vereinfacht werden. Anstelle eines Klebstoffs kann auch ein anderes Fügemittel als Vorfixierungs-Hilfsmittel zum Einsatz kommen.

Ausführungsbeispiele der Erfindung werden nachfolgend anhand der beigefügten Zeichnung näher erläutert. In dieser zeigen:
- Fig. 1: eine schematische Ansicht einer Teigbearbeitungsanlage mit einem Gärschrank mit einer Mehrzahl von Hänge-Aufnahmeeinrichtungen für Teiglinge;
- Fig. 2: eine perspektivische Ansicht einer Hänge-Aufnahmeeinrichtung;
- Fig. 3: eine Schnittdarstellung der Hänge-Aufnahmeeinrichtung entsprechend der Schnittlinie III-III in Fig. 2;
- Fig. 4: eine Seitenansicht der Hänge-Aufnahmeeinrichtung ohne Teigling-Auflageelement nach Fig. 1 und Fig. 2;
- Fig. 5: eine isolierte Draufsicht des in den Fig. 2 und 3 dargestellten Teigling-Auflageelements;
- Fig. 6: eine Schnittdarstellung der Hänge-Aufnahmeinrichtung entsprechend der Schnittlinie VI-VI in Fig. 4.
- Fig. 7: eine zu Fig. 2 ähnliche perspektivische Ansicht einer zweiten Ausführungsvariante der Hänge-Aufnahmeeinrichtung,
- Fig. 8: eine Schnittdarstellung der Hänge-Aufnahmeeinrichtung entsprechend der Schnittlinie VIII-VIII in Fig. 7,
- Fig. 9: eine zu Fig. 6 ähnliche Schnittdarstellung einer dritten Ausführungsvariante der Hänge-Aufnahmeeinrichtung und
- Fig. 10: eine zu Fig. 6 ähnliche Schnittdarstellung einer vierten Ausführungsvariante , der Hänge-Aufnahmeeinrichtung.

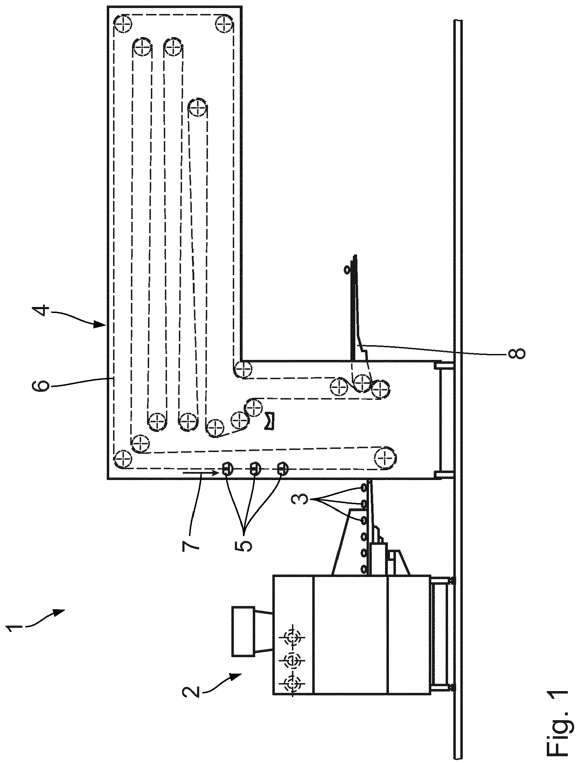

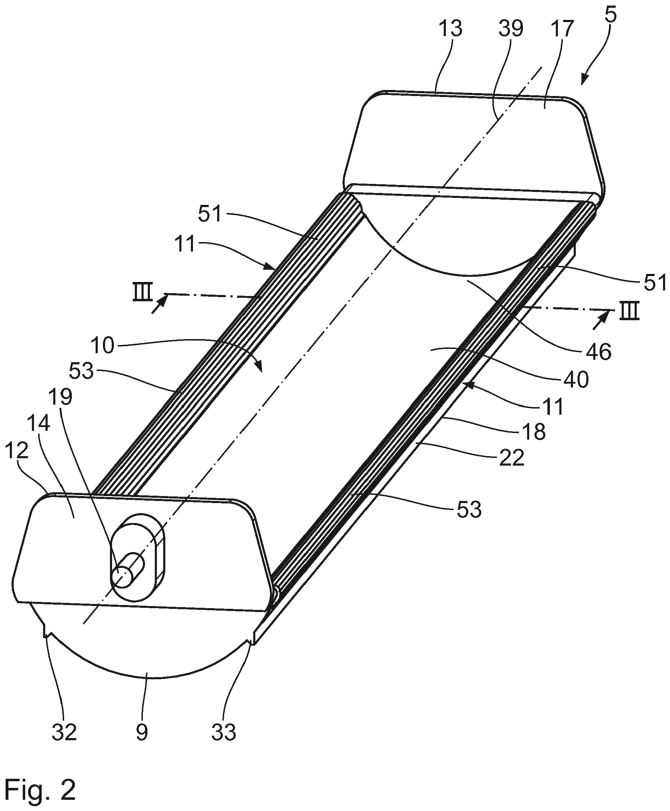

Eine in der Fig. 1 dargestellte Teigbearbeitungsanlage 1 hat eine Teigbearbeitungsmaschine 2 mit einer internen und nicht näher dargestellten Teigteileinrichtung und einer ebenfalls nicht näher dargestellten Teigwirkeinrichtung, in der in bekannter Weise Teiglinge 3 abgeteilt und rundgewirkt werden. Die Teiglinge 3 werden nach dem Rundwirken einem Gärschrank 4 zugeführt, in dem sie in Hänge-Aufnahmeeinrichtungen 5 aufgenommen sind, von denen in der Fig. 1 beispielhaft drei dargestellt sind. Die Hänge-Aufnahmeeinrichtungen 5 im Gärschrank 4 sind im Detail in den Fig. 2 bis 6 dargestellt. Die Hänge-Aufnahmeeinrichtungen 5 werden auch als Gärgutträger bezeichnet. Die Hänge-Aufnahmeeinrichtungen 5, die nachfolgend noch näher beschrieben werden, sind an endlos umlaufenden, mäanderförmigen Förderelementen 6, z. B. Förderketten, aufgehängt. Die Förderelemente 6 sind in Fig. 1 lediglich stark schematisch dargestellt. Die Hänge-Aufnahmeeinrichtungen 5 mit den Teigstücken 3 verlaufen quer zu deren Förderrichtung 7 durch den Gärschrank 4. Der Gärschrank 4 stellt den Gärraum einer Gärvorrichtung der Teigbearbeitungsanlage 1 dar. Die Teiglinge 3 werden mittels der Förderelemente 6 bis hin zu einem Übergabeband 8 gefördert, das eine Folge-Austrage-Fördereinrichtung der Teigbearbeitungsanlage 1 darstellt. Dieser Grundaufbau der Teigbearbeitungsanlage 1 ist üblich und bekannt, soweit es sich nicht um den Aufbau der Hänge-Aufnahmeeinrichtung 5 handelt, der im Detail in den Fig. 2 bis Fig. 6 dargestellt ist.

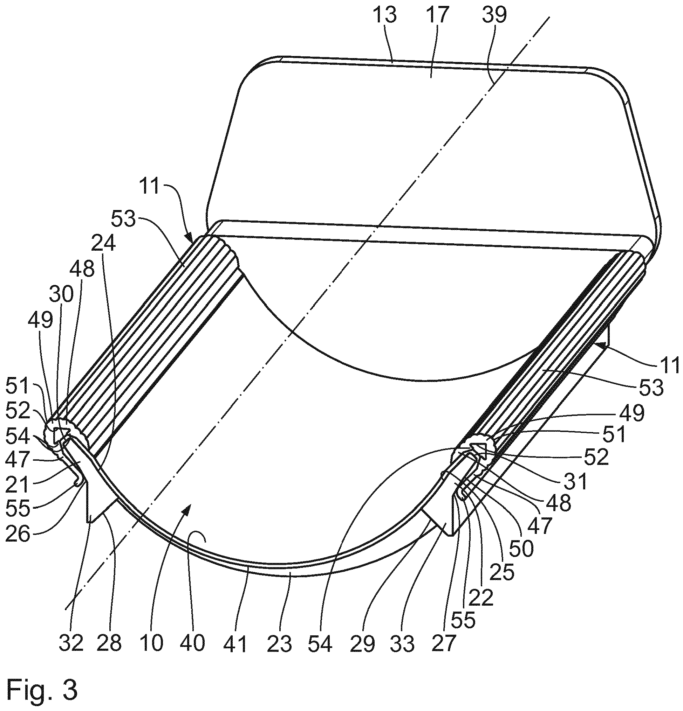

Die Hänge-Aufnahmeeinrichtung 5 umfasst einen Grundkörper 9, ein Teigling-Auflageelement 10 und mindestens eine Klemmvorrichtung 11, die als Klemmschiene 11 ausgebildet ist. In einer in den Fig. 2 und 3 dargestellten Einlege-Position der Hänge-Aufnahmeeinrichtung 5 ist das Teigling-Auflageelement 10 in den Grundkörper 9 eingelegt und mittels zweier Klemmschienen 11 an dem Grundkörper 9 fixiert.

Der Grundkörper 9 ist vorzugsweise aus Kunststoff geformt und umfasst zwei stirnseitige Abschlusswände 12, 13 mit Außenseiten 14, 15 und Innenseiten 16, 17, und ein die zwei Abschlusswände 12, 13 verbindendes Rahmenprofil 18.

An den voneinander abgewandten Außenseiten 14, 15 sind von den Außenseiten 14, 15 vorspringende Haltestifte 19, 20 vorgesehen. Die Längserstreckung der Haltestifte 19, 20 gibt eine Schwenkachse 39 der Hänge-Aufnahmeeinrichtung 5 vor.

Zwischen den einander zugewandten und im Wesentlichen parallel zueinander verlaufenden Innenseiten 16, 17 der Abschlusswände 12, 13 erstreckt sich das trogförmige Rahmenprofil 18. Das Rahmenprofil 18 umfasst zwei äußere Halteschienen 21, 22, deren Länge der Breite der Hänge-Aufnahmeeinrichtung 5 zwischen den Abschlusswänden 12, 13 entspricht, und eine Mehrzahl von einander beabstandeter Unterstützungsrippen 23, die quer zur Schwenkachse 39 zwischen den Halteschienen 21, 22 im Wesentlichen bogenförmig verlaufen. Die Unterstützungsrippen 23 dienen zur Auflage des Teigling-Auflageelements 10 der Hänge-Aufnahmeeinrichtung 5 und zur Versteifung des Rahmenprofils 18 des Grundkörpers 9.

Die Halteschienen 21, 22 erstrecken sich parallel zu einer durch die Schwenkachse 39 gehenden Mittel-Längs-Ebene und umfassen zur Mittel-Längs-Ebene gerichtete Innenseiten 24, 25, Außenseiten 26, 27, mit den Unterstützungsrippen 23 verbundene Unterkanten 28, 29 und Oberkanten 30, 31. Von den Außenseiten 26, 27 springen, sich im Wesentlichen über die gesamte Länge der Halteschienen 21, 22 erstreckende, Randvorsprünge 32, 33 nach außen vor.

Von den Oberkanten 30, 31 springen mehrere, von einander beabstandet angeordnete Arretiervorsprünge 34 nach oben vor, die vorzugsweise mit Perforierungen 35 des Teigling-Auflageelements 10 zusammenwirken.

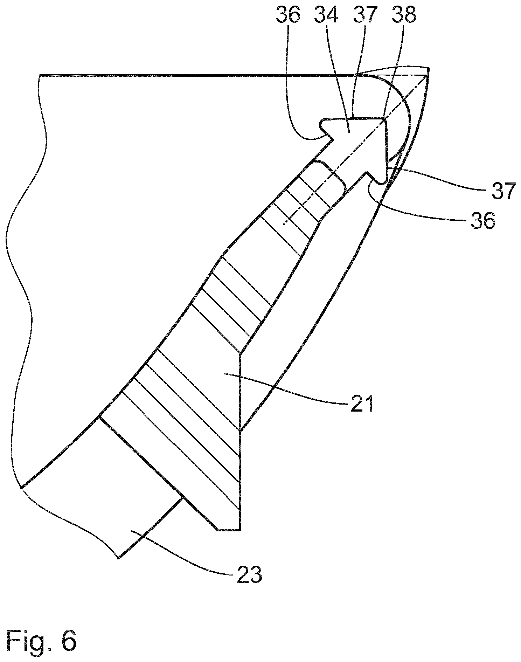

In einer bevorzugten Ausführungsform sind die Arretiervorsprünge 34 von den Oberkanten 30, 31 vorspringend, im Schnitt betrachtet, pfeilspitzenförmig ausgebildet. Die Arretiervorsprünge 34 weisen wie in Fig. 6 dargestellt, zwei im Wesentlichen senkrecht zu den Innenseiten 24, 25 bzw. Außenseiten 26, 27 verlaufenden Arretierflächen 36 und zwei aufeinander zulaufende, Stirnflächen 37 auf. Die Stirnflächen 37 weisen eine gemeinsame Kante 38 auf, welche, im Schnitt betrachtet, die Pfeilspitze der Arretiervorsprünge 34 bildet.

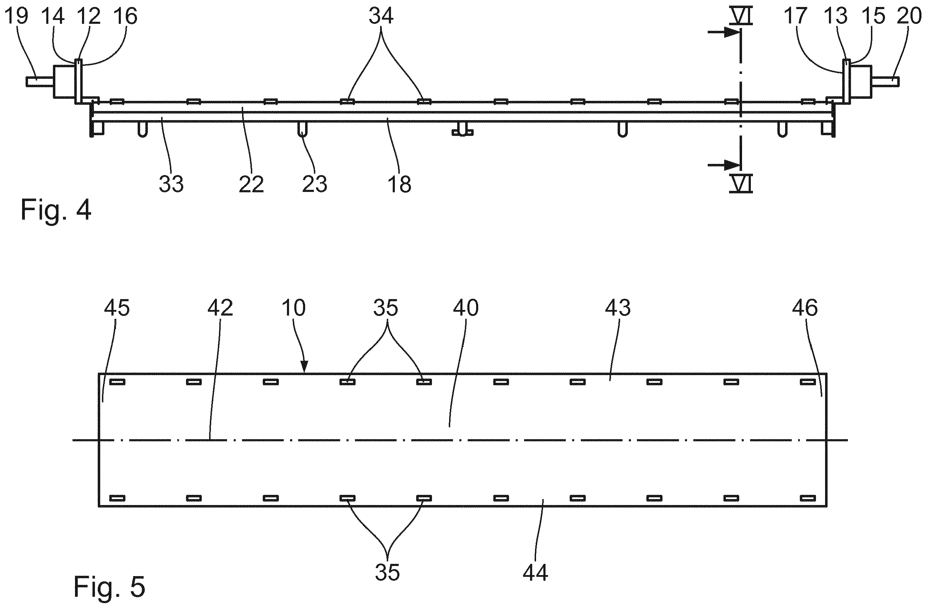

Das in Fig. 5 in einer Entnahme-Position gezeigte Teigling-Auflageelement 10 ist aus textilem Material gebildet, vorzugsweise als Einlegetuch. Je nach der Ausführung des Gärschranks 4 bzw. nach der Art des Gärvorgangs der Teigbearbeitungsanlage 1 ist das Teigling-Auflageelement 10 aus einem bestimmten Material gefertigt. Als Materialien eignen sich beispielsweise Filz, Gaze, Baumwoll- oder Leinenstoffe. Die Verwendung dieser Materialien ermöglicht es einen endgegärten Teigling 3 einfach von dem Teigling-Auflageelement 10 zu lösen. Bei der Vorgärung können andere Materialien eingesetzt werden als bei der Endgärung. Die Auswahl der Materialien zum Vorgären ist nach den geltenden Hygienevorschriften zu treffen. Materialien, die zur Sporenbildung und zum Kleben neigen, sollten nicht gewählt werden.

Das Teigling-Auflageelement 10 umfasst eine als Auflagefläche ausgebildete Oberseite 40, zur bereichsweisen Auflage für die Teiglinge 3 (in den Fig. 2 bis 6 nicht dargestellt), eine den Teiglingen 3 abgewandte Unterseite 41, und eine Mittel-Längs-Achse 42. Das Teigling-Auflageelement 10 ist bezüglich der Mittel-Längs-Achse 42 im Wesentlichen symmetrisch ausgebildet. Beabstandet zur Mittel-Längs-Achse 42 weist das Teigling-Auflageelement 10 längsseitige Randbereiche 43, 44 auf, die in der Einlege-Position mit den Halteschienen 21, 22 in Kontakt stehen. Quer zur Mittel-Längs-Achse 42 hat das Teigling-Auflageelement 10 querseitige Randbereiche 45, 46 die in Einlege-Position an den Innenseiten 16, 17 der Abschlusswände 12, 13 anliegen.

Die in der bevorzugten Ausführungsform vorgesehenen Perforierungen 35, die mit den Arretiervorsprüngen 34 des Grundkörpers 9 zusammenwirken, sind vorzugsweise beabstandet zu einander entlang der längsseitigen Randbereiche 43, 44 angeordnet. Die Perforierungen 35 sind dabei im Wesentlichen rechteckig gestaltet und symmetrisch zur Mittel-Längs-Achse 42 angeordnet. Die querseitige Randbereiche 45, 46 sind nicht mit Perforierungen versehen.

In der Einlege-Position ist das Teigling-Auflageelement 10 in den Grundkörper 9 eingelegt und steht mit seiner Unterseite 41 bereichsweise in Kontakt mit den Unterstützungsrippen 23 des Rahmenprofils 18, sowie mit den Innenseiten 24, 25, den Oberkanten 30, 31 und den Außenseiten 26, 27 der Halteschienen 21, 22. Des Weiteren sind die querseitigen Randbereiche 45, 46 des Teigling-Auflageelements 10 in der Einlege-Position benachbart zu den Innenseiten 16, 17 der Abschlusswände 12, 13 angeordnet. Die Perforierungen 35 sind in der Einlage-Position des Teigling-Auflageelements 10 über die Arretiervorsprünge 34 der Halteschienen 21, 22 übergestülpt. Durch das In-Kontakt-Bringen der Perforierungen 35 mit den Arretiervorsprüngen 34 ist das Teigling-Auflageelement 10 an dem Rahmenprofil 18 des Grundkörpers 9 vorfixiert.

Dadurch, dass die längsseitigen Randbereiche 43, 44 in der Einlege-Position um die Halteschienen 21, 22 umgeschlagen und mittels der Klemmschienen 11 befestigt sind, ist eine Toleranz bei der Abmessung des Teigling-Auflageelements 10 gewährleistet. Ein etwaiger Überstand der Randbereiche 43, 44 ist unter den Klemmschienen 11 festklemmbar und wirkt nicht störend.

Um das Teigling-Auflageelement 10, wie in den Fig. 2 und 3 dargestellt, vorübergehend an dem Grundkörper 9 zu befestigen, sind vorzugsweise zwei Klemmschienen 11 an den Halteschienen 21, 22 des Rahmenprofils 18 anzubringen.

Die Klemmschiene 11 umfasst einen ersten Klemmschenkel 47 , einen zweiten Klemmschenkel 48, einen die Klemmschenkel 47, 48 verbindenden Klemmschienenrücken 49, einen dem Klemmschienenrücken 49 gegenüberliegenden Klemmspalt 50, sowie eine Außenseite 51 und eine Innenseite 52. Die Klemmschiene 11 ist vorzugsweise aus Kunststoff mittel eines Extrusionsverfahren gefertigt und wieder verwendbar. Die Länge der Klemmschiene 11 entspricht im Wesentlichen der Länge der Halteschienen 21,22.

Der erste Klemmschenkel 47 ist in Einlege-Position dem auf dem Teigling-Auflageelement 10 aufliegenden Teigling 3 (nicht dargestellt) abgewandt, der zweite Klemmschenkel 48 dem Teigling 3 zugewandt. Die Klemmschenkel 47, 48 übertragen in Einlege-Position die vom Klemmschienenrücken 49 ausgehenden Federkräfte auf die Halteschienen 21, 22 bzw. auf das Teigling-Auflageelement 10, das durch die Klemmschiene 10 klemmend gehalten wird. Durch die Klemmschienen 11 ist das Teigling-Auflageelement 10 zuverlässig am Grundkörper 9 fixiert.

Die Außenseite 51 der Klemmschiene 11 weist vorzugsweise zumindest bereichsweise eine, im Schnitt betrachtet, gewellte Struktur auf. Durch die gewellte Struktur werden Längsrippen 53 vorgegeben. Die Längsrippen 53 erzeugen eine höhere Haltekraft durch eine verbesserte Federwirkung, die auch dann erhalten bleiben, wenn die Klemmschienen 11 über einen längeren Zeitraum in Einlege-Position an dem Grundkörper 9 angebracht sind. Die Längsrippen 53 haben auch den Vorteil, dass durch sie das Ankleben der Teiglinge 3 an der Klemmschiene 11 deutlich reduziert wird.

Die Kontur der Innenseiten 52 der Klemmschiene 11 entspricht im Wesentlichen der Außenkontur der Arretiervorsprünge 34 des Grundkörpers 9.

Durch die aufeinander abgestimmte Dimensionierung der Innenseite 52 der Klemmvorrichtung 11 und der Arretiervorsprünge 34 wird eine passgenaue Verbindung geschaffen.

In der in den Fig. 2 und 3 gezeigten Einlege-Position wirken Vorsprünge 54, die von der Innenseite 52 der Klemmschiene 11 weg nach Innen vorspringen, mit den Arretierflächen 36 der Arretiervorsprünge 34 zusammen, wodurch ein Widerhaken-Effekt erreicht wird.

Wie insbesondere Fig. 3 zu entnehmen, erstrecken sich die ersten Klemmschenkel 47 weiter vom Klemmschienenrücken 49 weg als die zweiten Klemmschenkel 48. Am vom Klemmschienenrücken 49 entfernt gelegenen Ende der ersten Klemmschenkel 47 schließt sich vorzugsweise ein Greif-Fortsatz 55 an, der sich vom Klemmspalt 50 weg, nach Außen erstreckt. Der Greif-Fortsatz 55 dient zum Greifen der Klemmschiene 11 durch einen Benutzer und zum Erleichtern des Abnehmens der Klemmschiene 11 vom Grundkörper 9.

Nachfolgend wird das Wechseln des Teigling-Auflageelements 10 der Hänge-Aufnahmeeinrichtung 5 beschrieben. Auszugehen ist hier von der in den Fig. 2 und 3 dargestellten Einlege-Position der Hänge-Aufnahmeeinrichtung 5. Wenn es nun erforderlich ist, das Teigling-Auflageelement 10 auszutauschen, sei es beispielsweise weil dieses verschmutzt ist oder aufgrund einer Änderung im Gärprozess ein anderes Teigling-Auflageelement 10 benötigt wird, sind zunächst die Klemmschienen 11 zu lösen. Hierzu sind die Klemmschienen 11 durch den Benutzer jeweils an den Außenseiten 51 und den Greif-Fortsätzen 55 zu greifen. Durch Krafteinwirkung ist der Klemmspalt 50 so zu vergrößern, dass die Klemmschienen 11 einfach abnehmbar sind. Anschließend ist das gebrauchte Teigling-Auflageelement 10 an den Randbereichen 43, 44 zu greifen und die Perforierungen 35 des Teigling-Auflageelements 10 von den Arretierungsvorsprüngen 34 abzuziehen. Das gebrauchte Teigling-Auflageelement 10 ist nun vom Grundkörper 9 gelöst und kann entnommen werden. Das neue bzw. gereinigte Teigling-Auflageelement 10 ist in der Folge in den Grundkörper 9 einzulegen. Zu diesem Zweck sind die Perforierungen 35 des neuen bzw. gereinigten Teigling-Auflageelements 10 über die Arretiervorsprünge 34 zu stülpen, wodurch eine Vorfixierung des Teigling-Auflageelements 10 an dem Grundkörper 9 erreicht wird. Zum abschließenden Fixieren sind die Klemmeschienen 11 wieder an dem Grundkörper 9 zu befestigen und die Hänge-Aufnahmeeinrichtung 5 in die in den Fig. 2 und 3 gezeigten Einlege-Position zu bringen. Zum Anbringen sind die Klemmschienen 11 wieder der der Außenseite 51 und den Greif-Fortsätzen 55 zu greifen und der Klemmspalt 50 durch Krafteinwirkung zu vergrößern. Hierdurch können die Klemmschienen 11 an den Halteschienen 21, 22 befestigt und das Teigling-Auflageelement 10 zwischen Klemmschienen 11 und Halteschienen 21, 22 eingeklemmt werden. Das gebrauchte Teigling-Auflageelement 10 ist entweder zu entsorgen oder mit einem üblichen Reinigungsverfahren, beispielsweise in einer herkömmlichen Waschmaschine, zu säubern.

Alternativ zum Vorfixieren des neuen bzw. gereinigten Teigling-Auflageelements 10 durch Überstülpen über den Grundkörper 9 können die Klemmschienen 11 und das Teigling-Auflageelement 10 vor dem Aufbringen auf dem Grundkörper 9 vorfixiert werden. Zum Vorfixieren können Hilfsmittel wie Klebstoffe oder andere Fügemittel verwendet werden. Hierdurch kann das Anbringen der Klemmschienen 11 und des Teigling-Auflageelements 10 am Grundkörper 9 vereinfacht werden.

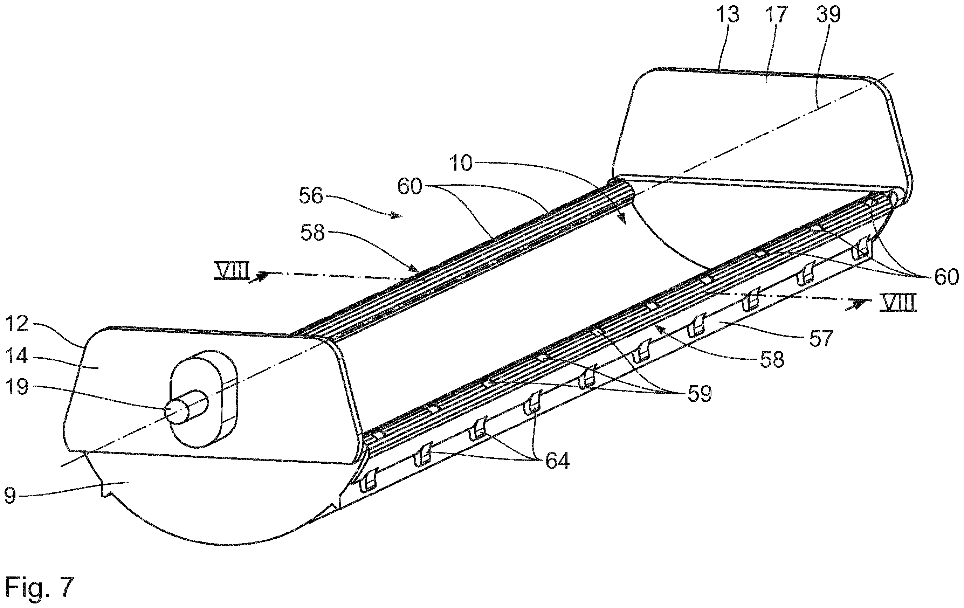

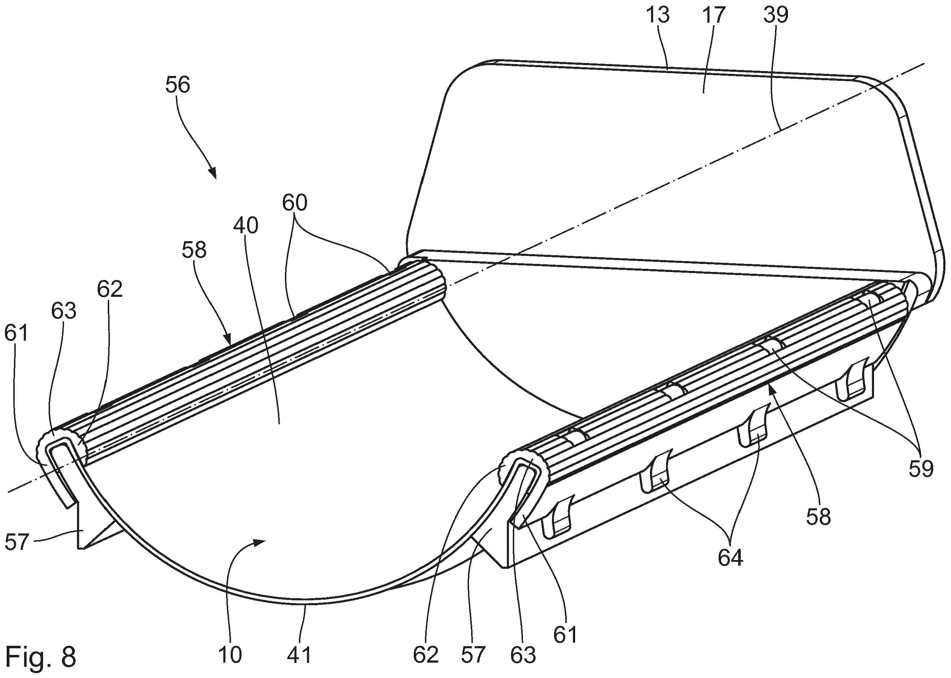

Fig. 7 und 8 zeigen eine weitere Variante einer Hänge-Aufnahmeeinrichtung 56. Komponenten, die denjenigen entsprechen, die vorstehend schon unter Bezugnahme auf die Fig. 1 bis 6 erläutert wurden, tragen die gleichen Bezugsziffern und werden nicht nochmals im Einzelnen diskutiert.

Die Hänge-Aufnahmeeinrichtung 56 unterscheidet sich von der Hänge-Aufnahmeeinrichtung 5 durch die Ausgestaltung des Rahmenprofils 57 und der mindestens einen Klemmschiene 58. Vorzugsweise umfasst die Hänge-Aufnahmeeinrichtung 56 in einer in den Fig. 7 und 8 dargestellten Einlege-Position zwei Klemmschienen 58.

Das Rahmenprofil 57 umfasst Arretierungsvorsprünge 59, die vergleichbar zu den Arretiervorsprüngen 34 angeordnet sind. Die Arretierungsvorsprünge 59 sind jedoch, im Schnitt betrachtet, nicht pfeilspitzenförmig sondern stumpf und ohne zusätzliche Kanten oder Arretierflächen, ausgebildet. Die Arretierungsvorsprünge 59 stehen in der Einlege-Position in Eingriff mit Aussparungen 60 der Klemmschiene 58.

Der Aufbau der Klemmschiene 58 entspricht im Wesentlichen dem Aufbau der Klemmschiene 11 der Hänge-Aufnahmeeinrichtung 5. Die Klemmschiene 58 umfasst einen ersten Klemmschenkel 61, einen zweiten Klemmschenkel 62 und einen Klemmschienenrücken 63. Die Aussparungen 60 sind beabstandet zu einander im Klemmschienenrücken 63, vorzugsweise als rechteckige Durchbrüche, ausgebildet. An den dem Klemmschienenrücken 63 abgewandten Ende des ersten Klemmschenkels 61 springen beabstandet von einander mehrere Greif-Vorsprünge 64 nach unten vor, die sich vom Klemmschienenrücken 63 weg erstrecken. Der Zweck der Greif-Vorsprünge 64 entspricht dem Zweck der Greif-Fortsätze 55 der Klemmschiene 11. Das in den Fig. 7 und 8 dargestellte Teigling-Auflageelement 10 entspricht dem Teigling-Auflageelement 10 der Hänge-Aufnahmeeinrichtung 5.

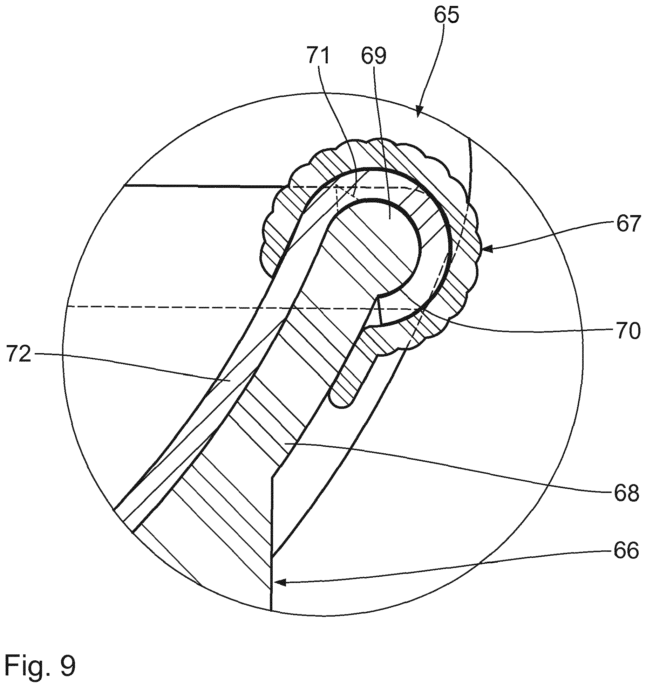

Anhand Fig. 9 wird eine dritte Variante einer Hänge-Aufnahmeeinrichtung 65 beschrieben. Komponenten, die denjenigen entsprechen, die vorstehend schon unter Bezugnahme auf die Fig. 1 bis 8 erläutert wurden, tragen die gleichen Bezugsziffern und werden nicht nochmals im Einzelnen diskutiert.

Die Hänge-Aufnahmeeinrichtung 65 unterscheidet sich von den Hänge-Aufnahmeeinrichtungen 5 und 56 durch die Ausgestaltung des Rahmenprofils 66 und der mindestens einen Klemmschiene 67.

Das in Fig. 9 im Schnitt dargestellte Rahmenprofil 66 weist zwei Halteschienen 68 auf, die im Wesentlichen den Halteschienen 21, 22 der Hänge-Aufnahmeeinrichtung 5 entsprechen. Die Halteschienen 68 umfassen jedoch einen oberen Bereich 69, der sich in Einlege-Position benachbart zu den Klemmschienen 67 befindet und als durchgehende Randwulst ausgebildet ist. Die Klemmschienen 67 sind in ihren Dimensionierungen an den als Randwulst ausgebildeten oberen Bereich 69 angepasst.

Von Außenkanten 70 des als Randwulst ausgebildeten oberen Bereichs 69 springen mehrere, von einander beabstandet angeordnete nadelartige Vorsprünge 71 nach oben vor, die vorzugsweise mit einem Teigling-Auflageelement 72 zusammenwirken.

Das Teigling-Auflageelement 72 entspricht im Wesentlichen dem Teigling-Auflageelement 10, weist im Gegensatz zum Teigling-Auflageelement 10 jedoch keinerlei Perforierungen oder Aussparungen auf. Durch die nadelartige Gestaltung der Vorsprünge 71 ist das Vorsehen von Perforierungen in dem Teigling-Auflageelement 72 nicht notwendig, da mittels Überstülpen des Teigling-Auflageelements 72 über den oberen Bereich 69, die Vorsprünge 71 in das Teigling-Auflageelement 72 stechen und dieses so fixieren. Für das Teigling-Auflageelement 72 ist dafür ein Material zu wählen, in das die nadelartigen Vorsprünge 71 beim Überstülpen durch geringe Krafteinwirkung eindringen können.

Durch diese Ausgestaltung kann das Teigling-Auflageelement 72 noch flexibler und mit größerer Toleranz hinsichtlich seiner Abmessungen gewählt werden. In der Einlege-Position nach Fig. 9 verschwinden die nadelartigen Vorsprünge 71 in dem Teigling-Auflageelement 72 und treten nicht mit den Klemmschienen 67 in Kontakt.

Soweit, wie vorstehend im Zusammenhang mit der Ausführung nach den Fig. 1 bis 6, die Klemmschienen 67 und die Teigling-Auflageelemente 72 vor dem Aufbringen am Grundkörper 9 vorfixiert werden, beispielsweise durch einen Klebstoff oder durch ein anderes Fügemittel, kann auf die nadelartigen Vorsprünge 71 auch verzichtet werden.

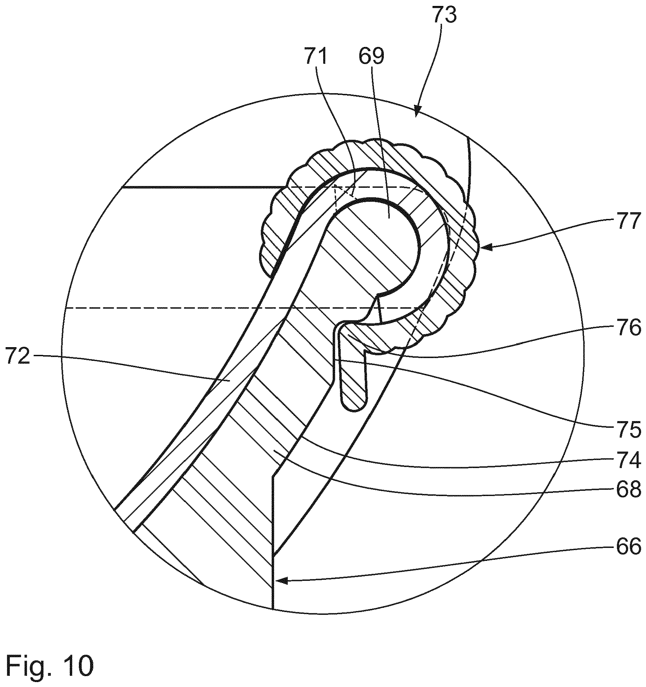

Die vierte Ausführungsvariante einer Hänge-Aufnahmeeinrichtung 73 nach Fig. 10 unterscheidet sich von der dritten Ausführungsvariante nach Fig. 9 dadurch, dass an Außenseiten 74 der Halteschienen 68, die dem Teigling-Auflageelement 72 abgewandt sind, Längsvertiefungen 75 vorgesehen sind, die sich über die gesamte Länge der Halteschienen 68 erstrecken. In die Längsvertiefungen 75 greifen Arretierkanten 76 von Klemmschienen 77 ein. Die Klemmschienen 77 entsprechen mit Ausnahme der zusätzlichen Arretierkanten 76 den Klemmschienen 67 nach Fig. 9. Durch einen Eingriff der Arretierkanten 76 in die Längsvertiefungen 75 wird eine hohe Positioniergenauigkeit der Klemmschienen 77 an den Halteschienen 68 gewährleistet. Durch die Positioniergenauigkeit der Klemmschienen 77 wird die Fixierung des Teigling-Auflageelements 72 weiter optimiert.

## Patentansprüche

1. Hänge-Aufnahmeeinrichtung (5; 56; 65; 73) für mindestens einen Teigling (3) mit
a) einem Grundkörper (9), der um eine Schwenkachse (39) schwenkbar mit einem eine Mehrzahl derartiger Hänge-Aufnahmeeinrichtungen (5; 56; 65; 73) fördernden Förderelement (6) verbindbar ist, und
b) mit einem Teigling-Auflageelement (10; 72) mit einer Auflagefläche (40) für den Teigling (3),
c) wobei das Teigling-Auflageelement (10; 72) als Wechsel-Einlage aus textilem Material gebildet ist,
d) wobei das Teigling-Auflageelement (10; 72) mit dem Grundkörper (9) mittels mindestens einer Klemmvorrichtung (11; 58; 67; 77) lösbar verbunden ist, **dadurch gekennzeichnet, dass** d1) die mindestens eine Klemmvorrichtung als abnehmbare Klemmschiene aus Kunststoff ausgebildet ist, wobei
e) zumindest ein Randbereich (43, 44) des Teigling-Auflageelements (10; 72) zwischen Grundkörper (9) und Klemmschiene (11; 58; 67; 77) eingeklemmt ist.

2. Hänge-Aufnahmeeinrichtung (5) nach Anspruch 1, **dadurch gekennzeichnet, dass** die mindestens eine Klemmschiene (11) zwei Klemmschenkel (47, 48), einen die Klemmschenkel (47, 48) verbindenden Klemmschienenrücken (49) sowie einen dem Klemmschienenrücken (49) gegenüberliegenden Klemmspalt (50) aufweist.

3. Hänge-Aufnahmeeinrichtung (5) nach einem der vorstehenden Ansprüche, **dadurch gekennzeichnet, dass** die mindestens eine Klemmschiene (11) an deren Außenseite (51) zumindest bereichsweise eine gewellte Struktur aufweist.

4. Hänge-Aufnahmeeinrichtung (56) nach einem der vorstehenden Ansprüche, **dadurch gekennzeichnet, dass** die mindestens eine Klemmschiene (58) mindestens eine Aussparung (60) aufweist.

5. Hänge-Aufnahmeeinrichtung (5) nach einem der vorstehenden Ansprüche, **dadurch gekennzeichnet, dass** der Grundkörper (9) zwei seitliche Haltestifte (19, 20) zur Schwenkverbindung mit dem Förderelement (6) aufweist.

6. Hänge-Aufnahmeeinrichtung (5; 56; 65; 73) nach einem der vorstehenden Ansprüche, **dadurch gekennzeichnet, dass** der Grundkörper (9) Arretiervorsprünge (34; 59; 71) zum Zusammenwirken mit dem Teigling-Auflageelement (10; 72) bzw. mit der Klemmschiene (11; 58; 67; 77) aufweist.

7. Hänge-Aufnahmeeinrichtung (5; 56; 65; 73) nach einem der vorstehenden Ansprüche, **dadurch gekennzeichnet, dass** das Teigling-Auflageelement (10; 72) als Zuschnitt aus einem textilen Flächengebilde, insbesondere Filz, Gaze, Baumwoll- oder Leinenstoffe, gebildet ist.

8. Hänge-Aufnahmeeinrichtung (5; 56) nach einem der vorstehenden Ansprüche, **dadurch gekennzeichnet, dass** das Teigling-Auflageelement (10) Perforierungen (35) aufweist.

9. Hänge-Aufnahmeeinrichtung (5; 56) nach Anspruch 8, **dadurch gekennzeichnet, dass** die Perforierungen (35) in mindestens einem Randbereich (43, 44) des Teigling-Auflageelements (10) vorgesehen sind.

10. Hänge-Aufnahmeeinrichtung (5; 56) nach Anspruch 8 oder 9, **dadurch gekennzeichnet, dass** die Perforierungen (35) mit den Arretiervorsprüngen (34) des Grundkörpers (9) zusammenwirken.

11. Gärschrank mit einer Hänge-Aufnahmeeinrichtung (5; 56; 65; 73) nach einem der vorstehenden Ansprüche.

12. Verfahren zum Wechseln des Teigling-Auflageelements (10; 72) der Hänge-Aufnahmeeinrichtung nach den Ansprüchen 1-11, umfassend die Schritte
a) Abnehmen der mindestens einen Klemmschiene (11; 58; 67; 77)
b) Entnahme des gebrauchten Teigling-Auflageelements (10; 72),
c) Einlegen des neuen bzw. gereinigten Teigling-Auflageelements (10; 72),
d) Vorfixieren des neuen bzw. gereinigten Teigling-Auflageelements (10; 72) durch Überstülpen des neuen bzw. gereinigten Teigling-Auflageelements (10; 72) über den Grundkörper (9), und
e) Wiederanbringen der mindestens einen Klemmschiene (11; 58; 67; 77) zum Verklemmen des Teigling-Auflageelements (10; 72) mit dem Grundkörper (9).

## Claims

1. Suspended holding device (5; 56; 65; 73) for at least one dough piece (3) comprising
a) a main body (9), which can be connected pivotably about a pivot axis (39) to a conveying element (6) conveying a plurality of such suspended holding devices (5; 56; 65; 73),
b) a dough piece support element (10; 72) with a support surface (40) for the dough piece (3),
c) wherein the dough piece support element (10; 72) is designed as a replaceable insert made from a textile material,
d) wherein the dough piece support element (10; 72) is connected releasably to the main body (9) by means of at least one clamping device (11; 58; 67; 77),
**characterised in that**
d1) the at least one clamping device is designed as a removable clamping rail made of plastic, wherein
e) at least one edge area (43, 44) of the dough piece support element (10; 72) is clamped between the main body (9) and clamping rail (11; 58; 67; 77).

2. Suspended holding device (5) according to claim 1, **characterised in that** the at least one clamping rail (11) comprises two clamping arms (47, 48), a clamping rail back (49) connecting the clamping arms (47, 48) and a clamping slot (50) opposite the clamping rail back (49).

3. Suspended holding device (5) according to any one of the preceding claims, **characterised in that** the at least one clamping rail (11) has at least partly a corrugated structure on the outside (51).

4. Suspended holding device (56) according to any one of the preceding claims, **characterised in that** the at least one clamping rail (58) comprises at least one recess (60).

5. Suspended holding device (5) according to any one of the preceding claims, **characterised in that** the main body (9) has two lateral holding pins (19, 20) for pivotably connecting to the conveyor element (6).

6. Suspended holding device (5; 56; 65; 73) according to any one of the preceding claims, **characterised in that** the main body (9) comprises locking projections (34; 59; 71) for cooperating with the dough piece support element (10; 72) or with the clamping rail (11; 58; 67; 77).

7. Suspended holding device (5; 56; 65; 73) according to any one of the preceding claims, **characterised in that** the dough piece support element (10: 72) is designed as a cut-out of textile fabric, in particular felt, gauze, cotton or linen.

8. Suspended holding device (5; 56) according to any one of the preceding claims, **characterised in that** the dough piece support element (10) comprises perforations (35).

9. Suspended holding device (5; 56) according to claim 8, **characterised in that** the perforations (35) are formed at least in an edge area (43, 44) of the dough piece support element (10).

10. Suspended holding device (5; 56) according to claim 8 or 9, **characterised in that** the perforations (35) interact with the locking projections (34) of the main body (9).

11. Proving oven with a suspended holding device (5; 56; 65; 73) according to any one of the preceding claims.

12. Method for changing the dough piece support element (10; 72) of the suspended holding device according to claims 1-11, comprising the steps
a) removing the at least one clamping rail (11; 58; 67; 77),
b) taking out the used dough piece support element (10; 72),
c) inserting the new or cleaned dough piece support element (10; 72),
d) prefixing the new or cleaned dough piece support element (10; 72) by placing the new or cleaned dough piece support element (10; 72) over the main body (9), and
e) reattaching the at least one clamping rail (11; 58; 67; 77) for clamping the dough piece support element (10; 72) to the main body (9).

## Revendications

1. Dispositif de réception en suspension (5 ; 56 ; 65 ; 73) pour au moins un pâton (3) comprenant
a) un corps de base (9), qui peut être relié à un élément de transport (6) transportant une pluralité de dispositifs de réception en suspension (5 ; 56 ; 65 ; 73) de ce type de manière à pouvoir pivoter autour d'un axe de pivotement (39), et
b) un élément de support de pâton (10 ; 72) comprenant une surface de support (40) pour le pâton (3),
c) l'élément de support de pâton (10 ; 72) étant réalisé sous la forme d'un insert interchangeable en matière textile,
d) l'élément de support de pâton (10 ; 72) étant relié de manière détachable au corps de base (9) au moyen d'au moins un dispositif de serrage (11 ; 58 ; 67 ; 77),
**caractérisé en ce que**
d1) le ou les dispositifs de serrage sont réalisés sous la forme d'un rail de serrage amovible en matière plastique,
e) au moins une zone de bord (43, 44) de l'élément de réception de pâton (10 ; 72) étant serrée entre le corps de base (9) et le rail de serrage (11 ; 58 ; 67 ; 77).

2. Dispositif de réception en suspension (5) selon la revendication 1, **caractérisé en ce que** le ou les rails de serrage (11) comprennent deux branches de serrage (47, 48), un dos (49) de rail de serrage reliant les branches de serrage (47, 48) ainsi qu'une fente de serrage (50) opposée au dos (49) du rail de serrage.

3. Dispositif de réception en suspension (5) selon l'une quelconque des revendications précédentes, **caractérisé en ce que** le ou les rails de serrage (11) présentent sur leur face extérieure (51) au moins par endroits une structure ondulée.

4. Dispositif de réception en suspension (56) selon l'une quelconque des revendications précédentes, **caractérisé en ce que** le ou les rails de serrage (58) comprennent au moins un évidement (60).

5. Dispositif de réception en suspension (5) selon l'une quelconque des revendications précédentes, **caractérisé en ce que** le corps de base (9) comprend deux tiges de retenue (19, 20) latérales permettant la liaison pivotante à l'élément de transport (6).

6. Dispositif de réception en suspension (5 ; 56 ; 65 ; 73) selon l'une quelconque des revendications précédentes, **caractérisé en ce que** le corps de base (9) comprend des parties saillantes de blocage (34 ; 59 ; 71) destinées à coopérer avec l'élément de réception de pâton (10 ; 72) ou avec le rail de serrage (11 ; 58 ; 67 ; 77).

7. Dispositif de réception en suspension (5 ; 56 ; 65 ; 73) selon l'une quelconque des revendications précédentes, **caractérisé en ce que** l'élément de réception de pâton (10 ; 72) est réalisé sous la forme d'une découpe faite d'une structure plane textile, en particulier de feutre, de gaze, d'étoffes de coton ou de lin.

8. Dispositif de réception en suspension (5 ; 56) selon l'une quelconque des revendications précédentes, **caractérisé en ce que** l'élément de réception de pâton (10) comprend des perforations (35).

9. Dispositif de réception en suspension (5 ; 56) selon la revendication 8, **caractérisé en ce que** les perforations (35) sont ménagées dans au moins une zone de bord (43, 44) de l'élément de réception de pâton (10).

10. Dispositif de réception en suspension (5 ; 56) selon la revendication 8 ou 9, **caractérisé en ce que** les perforations (35) coopèrent avec les parties saillantes de blocage (34) du corps de base (9).

11. Chambre de fermentation comprenant un dispositif de réception en suspension (5 ; 56 ; 65 ; 73) selon l'une quelconque des revendications précédentes.

12. Procédé de remplacement de l'élément de support de pâton (10 ; 72) du dispositif de réception en suspension selon l'une quelconque des revendications 1 à 11, comprenant les étapes consistant à
a) retirer le ou les rails de serrage (11 ; 58 ; 67 ; 77)
b) prélever l'élément de support de pâton (10 ; 72) usagé,
c) insérer le nouvel élément de support de pâton (10 ; 72) ou l'élément de support nettoyé,
d) préfixer le nouvel élément de support de pâton (10 ; 72) ou l'élément de support nettoyé en enfilant le nouvel élément de support de pâton (10 ; 72) ou l'élément de support nettoyé sur le corps de base (9), et
e) monter à nouveau le ou les rails de serrage (11 ; 58 ; 67 ; 77) pour serrer l'élément de réception de pâton (10 ; 72) avec le corps de base (9).
